# FASCICULE DE BREVET EUROPEEN

(11) **EP 1 574 041 B1**
(45) Date de publication et mention de la délivrance du brevet: **16.04.2008**
(21) Numéro de dépôt: 03799719.4
(22) Date de dépôt: 12.12.2003
(51) Int. Cl.: H04N 1/32

(54) **PROCEDE DE MARQUAGE D'UNE IMAGE ET PROCEDE ASSOCIE DE RECUPERATION D'UNE MARQUE**
VERFAHREN FÜR ELEKTRONISCHE WASSERZEICHEN UND VERFAHREN ZUM WIEDERFINDEN VON WASSERZEICHENINFORMATION
METHOD FOR MARKING AN IMAGE AND RELATED METHOD FOR RECOVERING A MARK

(30) Priorité: 19.12.2002 FR 0216223
(43) Date de publication de la demande: 14.09.2005
(73) Titulaire: SAGEM Communication, 75015 Paris (FR)
(72) Inventeur: LABROT, Caroline, F-78100 St Germain en Laye (FR); SETTON, Eric, F-75116 Paris (FR)
(74) Mandataire: Camus, Olivier Jean-Claude
(86) Numéro de dépôt international: PCT/FR2003/050163
(87) Numéro de publication internationale: WO 2004/057856

(56) Documents cités:
- WO-A-01/24113
- WO-A-01/35323
- WO-A-02/073534
- US-A- 6 081 345

## Description

### DOMAINE TECHNIQUE DE L'INVENTION

La présente invention a pour objet un procédé de marquage d'une image et un procédé pour récupérer une marque insérée dans une image préalablement marquée au moyen dudit procédé de marquage. Le procédé selon l'invention est destiné notamment aux appareils de type photocopieur, mais il peut être étendu à tout dispositif avec lesquels on est susceptible de reproduire une image, ladite reproduction faisant intervenir au moins une étape de numérisation de l'image. De tels appareils sont par exemple les scanners, les imprimantes ou les appareils photographiques numériques.

L'invention a essentiellement pour but de proposer un procédé de marquage de photocopies couleurs. Une application immédiate du procédé selon l'invention est de prévenir la contrefaçon de billets de banque au moyen d'une photocopieuse couleur, en insérant une marque comportant une information relative à l'identification de la photocopieuse utilisée.

Le domaine de l'invention est, d'une façon générale, celui des systèmes destinés à prévenir la contrefaçon de documents imprimés. Dans ce domaine, on connaît notamment des techniques faisant intervenir des impressions d'hologrammes ou de motifs spéciaux, des impressions avec encres spéciales, ou encore des impressions de codes utilisant des encres invisibles. Les applications connues de ces techniques ne sont pas adaptées pour être utilisées dans un procédé de marquage où une phase de numérisation de l'image à marquer intervient. Dans ce domaine, on connaît également une technique dite de tatouage numérique, watermarking en anglais, dans laquelle on cache des informations, appelées marque ou signature, de manière robuste et imperceptible dans des images. La technique de tatouage numérique peut également être utilisée dans d'autres domaines tels que la musique, la vidéo, les documents manuscrits... Un exemple d'application générale d'une telle technique est donnée dans la demande de brevet international publiée le 31 janvier 2002 sous le numéro WO 02/09019, au nom de la société DIGIMARC ; dans ce document, un code inséré par stéganographie dans un produit permet, après comparaison avec ledit code préalablement reçu, d'authentifier ledit produit.

WO 0135323 divulgue un procédé de marquage qui présente la particularité consistant à insérer une marque dans une image à travers une unique composante d'un espace colorimétrique.

Le procédé selon l'invention propose essentiellement une solution de tatouage numérique particulièrement performante en terme d'invisibilité et de robustesse de la marque à dissimuler, ainsi qu'en terme de rapidité d'implémentation.

### ARRIERE-PLAN TECHNOLOGIQUE DE L'INVENTION

D'une façon générale, les tatouages numériques, ou watermark en anglais, se caractérisent par deux propriétés essentielles : une watermark doit être invisible, indétectable, et le procédé par lequel on l'introduit dans une image doit être réversible. Par les termes invisibles ou indétectables, on désigne le fait qu'un support comportant une marque doit avoir exactement le même aspect que le même support ne comportant pas la marque. Un individu ne doit pas pouvoir, au seul moyen de ses sens, faire la distinction entre un support marqué et le support original. Seul un traitement numérique réalisé au moyen d'un matériel adapté doit être en mesure de déterminer la présence d'une marque.

Par ailleurs, dans le domaine des tatouages numériques, la marque est la plupart du temps dépendante de la cible dans laquelle on cherche à l'introduire. On parle de dépendance de la marque. Ainsi, dans le cas d'une image, il faut déterminer un ensemble de pixels qui sont susceptibles d'être modifiés, cet ensemble de pixels constituant la dépendance en image de la marque. En d'autres termes, la dépendance en image de la marque dans une image que l'on cherche à marquer est constituée par un ensemble de pixels, déterminé selon des critères propres au procédé de marquage utilisé, dont les valeurs sont susceptibles d'être modifiées de façon à y dissimuler des informations relatives à la marque. Une fois la dépendance en image déterminée, la deuxième étape essentielle d'un procédé de tatouage numérique consiste en la modification des pixels de l'image appartenant à la dépendance en image afin d'y inclure la marque, là encore selon des critères propres au procédé. Ces critères font le plus souvent intervenir des techniques connues de type seuillage ou ajout de bruit pseudo-aléatoire afin de modifier certains coefficients de l'image selon des règles propres à chaque procédé.

Enfin, selon leurs applications, les différents procédés de tatouage numérique doivent être plus ou moins résistants, robustes, aux différents types de perturbation ou transformation que peut être amené à subir leur support. On connaît ainsi différents procédés de marquage destinés à prouver l'authenticité d'images numériques. Les marques utilisées doivent alors être particulièrement fragiles et disparaître à la moindre tentative de modification de l'image. Un tel exemple d'application est donné dans la demande de brevet internationale publiée le 28 mars 2002 sous le numéro WO 02/25599, avec comme inventeur F. JORDAN. On connaît également d'autres procédés de marquage dont les marques doivent pouvoir être détectées même si leur support subit un certain nombre d'altérations, ces altérations, pour des images, pouvant notamment être des rotations, des translations, la perte d'une partie de l'image...D'une façon générale, on dit qu'une marque est robuste si la seule manière de la rendre indétectable sur un support est d'altérer de façon notoire ce support.

Bien que les procédés de tatouage numérique soient nombreux et variés, on peut les distinguer dans deux catégories :
- d'une part ceux qui modifient l'image dans le domaine spatial, par exemple un espace couleur préalablement choisi ; on connaît notamment le procédé décrit dans l'article publié par J.XIAO et al. dans le compte-rendu de la conférence intitulée "Image Compression and Encryption Technologies" (Voir Proceedings of the SPIE, Vol 4551, pp.69-73, 2001), et dont le titre anglais est "Watermarking algorithm based on permutation and PDF417 coding". Ce document montre un procédé de tatouage numérique dans lequel on procède à une permutation aléatoire des éléments constituant l'image cible avant d'insérer une marque de type code barre. Mais un tel procédé requiert des calculs importants qui ne permettent pas de le mettre en application dans un appareil de type photocopieuse, et la robustesse de la marque insérée n'est pas satisfaisante.
- d'autre part, ceux qui modifient une transformation, par exemple fréquentielle, de l'image, transformation effectuée le plus souvent sur une base d'ondelettes appropriée. Les transformées en ondelettes sont majoritairement utilisées car elles sont apparues, jusqu'à présent, comme les plus efficaces en terme de non visibilité de la marque dissimulée. Cependant, elles sont exigeantes en terme de calculs lors de leur mise en oeuvre, ce qui est prohibitif pour une des applications principales de l'invention, à savoir la prévention de la contrefaçon d'images au moyen d'une photocopieuse couleur. En effet, dans une telle application, la marque doit pouvoir être introduite dans le temps habituellement nécessaire pour réaliser une photocopie.

### DESCRIPTION GENERALE DE L'INVENTION

Le procédé selon l'invention s'inscrit donc dans le cadre des procédés de tatouage numérique dont les principes généraux viennent d'être décrits. Son but essentiel est de proposer un compromis entre des caractéristiques de robustesse, d'invisibilité et de rapidité d'insertion que doit présenter la marque. L'invention propose en outre un procédé dont les différentes étapes s'enchaînent rapidement de telle sorte que le marquage est réalisé en temps réel. La mise en oeuvre de l'invention a obéi à plusieurs contraintes, parmi lesquelles, on trouve notamment :
- une contrainte dite géométrique, le procédé de marquage devant résister aux opérations de rotation, de translation ou de fenêtrage (opération consistant à ne sélectionner qu'une partie de l'image) d'une image à marquer. En effet, celle-ci peut être initialement disposée de manière libre avant de subir les différentes opérations du procédé, et on doit être en mesure de récupérer la marque quelle que soit la position initiale de l'image à marquer ;
- une contrainte dite de décalage à la numérisation : la numérisation d'une image couleur par un appareil de type scanner consiste à découper l'image en un quadrillage et à faire la moyenne, sur chacun des carreaux du quadrillage, des différentes valeurs prises pour chaque composante de l'image. Selon la position initiale de l'image, la valeur moyenne d'une composante peut varier. Aussi, deux opérations de numérisation successives de la même image peuvent elles donner des pixels différents. Cette contrainte illustre une des difficultés d'un codage résistant au passage de l'analogique au numérique ;
- une contrainte dite de bruit d'impression : lors de toute impression, les images subissent une opération de tramage. Une telle opération consiste à transformer les images codées sur n bits par composante en images codées sur un bit par composante. Ce bit détermine la présence éventuelle d'encre ou de toner pour la composante considérée. Cette transformation dégrade l'image, et dégrade donc une marque qui y aurait été insérée. Cependant, dans le procédé selon l'invention, la marque est récupérée de façon fiable, même après une telle dégradation.

Pour atteindre ces différents objectifs, le procédé selon l'invention s'articule autour de trois étapes distinctes: une première étape consiste dans le choix d'une marque à insérer ; une deuxième étape consiste dans le choix de la dépendance en image ; une troisième étape consiste dans la modification de la dépendance en image. Ces trois étapes sont de préférence combinées. Mise en oeuvre séparément dans différents procédés de marquage, chacune des étapes ci-dessus apporte une solution pour améliorer soit la robustesse, soit l'invisibilité, soit la rapidité d'insertion de la marque.

Ainsi, l'invention propose tout d'abord l'utilisation d'une marque se présentant sous la forme d'un code barre qui serait répété à l'identique plusieurs fois avant d'être inséré dans une image à marquer, dite image cible. La disposition des différentes répétitions du code barre donne à la marque notamment une grande robustesse qui permet de faciliter les étapes de sa récupération dans une image marquée. De préférence, dans l'invention, on propose d'insérer la marque dans des zones de contour de l'image cible. La dépendance en image est donc construite dans un espace couleur préalablement déterminé, et elle est incluse dans des zones de contour. Elle est, dans un exemple de mise en oeuvre, constituée de pixels dont la valeur dans une des composantes couleurs de l'espace couleur choisi correspond à certains critères.

L'invention concerne donc un procédé de marquage d'une image cible, du type de ceux consistant à insérer de manière invisible une marque dans cette image cible, comportant notamment les différentes étapes consistant à :
- numériser l'image cible ;
- déterminer dans l'image cible une ensemble de pixels appropriés au marquage constituant la dépendance en image;
- modifier des valeurs de composantes d'un sous-ensemble de pixels appartenant à la dépendance en image en y introduisant des informations relatives à la marque à insérer.

La caractéristique essentielle du procédé selon l'invention est que, ces composantes étant au moins au nombre de trois, la marque à insérer est constituée d'un pavage formé d'une répétition de motifs identiques de type code-barre présentant une succession de barres noires et de barres blanches ; ce pavage comporte au moins un premier motif et un deuxième motif juxtaposés, le deuxième motif ayant subi une rotation de 90 degrés par rapport au premier motif; et que - le procédé selon l'invention comporte, dans l'étape de détermination de la dépendance en image, l'opération consistant à sélectionner un ensemble de pixels constituant des zones de contour dans une première composante d'un espace colorimétrique dans lequel l'image cible est numérisée, ou dans un autre espace colorimétrique dans lequel on se place pour obtenir un espace colorimétrique de travail plus approprié ; et dans l'étape de modification de valeurs de composantes, l'opération consistant à, pour les pixels sélectionnés, et dans au moins une deuxième composante dudit espace colorimétrique, modifier certaines valeurs de niveau de gris de cette composante pour y introduire une information relative à la marque H.

Le procédé selon l'invention présente en outre avantageusement une ou plusieurs des caractéristiques suivantes :
- le motif est un code barre carré ;
- la marque à insérer est une répétition, sur la totalité d'une surface correspondant à la taille de l'image cible, du motif de type code barre, chaque motif ayant subi une rotation de 90 degrés par rapport à chaque motif qui lui est directement adjacent ;
- la dépendance en image est comprise dans des zones de contour de l'image cible ;
- les composantes modifiées de l'espace colorimétrique sont une deuxième composante et une troisième composante de l'espace colorimétrique, les valeurs de niveau de gris de la deuxième composante étant modifiées pour introduire une information relative à la présence d'une bande noire du motif de type code barre, et les valeurs de niveau de gris de la troisième composante étant modifiées pour introduire une information relative à la présence d'une bande blanche du motif de type code barre ;
- les valeurs de niveau de gris à modifier sont celles qui sont inférieures à un seuil de modification préalablement déterminé, deux composantes différentes pouvant avoir des seuils de modification différents ;
- le procédé selon l'invention comporte, dans l'étape de détermination de la dépendance en image, les opérations consistant à :
   - sélectionner un ensemble de pixels de l'image cible, dans un groupe de composantes d'un espace colorimétrique dans lequel l'image cible est numérisée, dont les valeurs de niveau de gris sont inférieures, pour chaque composante considérée, à un seuil de modification propre à chaque composante ;
   - choisir, parmi les pixels sélectionnés, ceux appartenant à une zone de contour dans une première composante de l'espace colorimétrique n'appartenant pas au groupe de composantes, pour constituer la dépendance en image ;
   dans ce cas, le groupe de composantes est constitué de préférence d'une deuxième composante et d'une troisième composante de l'espace colorimétrique, et, pour les pixels constituant la dépendance en image, les valeurs de niveau de gris de la deuxième composante sont modifiées en y introduisant une information relative à la présence d'une bande noire du motif de type code barre, et les valeurs de niveau de gris de la troisième composante sont modifiées en y introduisant une information relative à la présence d'une bande blanche du motif de type code barre.
- l'espace image dans lequel l'image cible est numérisée est l'espace colorimétrique;
- la première composante est la composante rouge, la deuxième composante est la composante bleue, et la troisième composante est la composante verte;

Un autre objet de l'invention est un procédé de récupération d'une marque insérée selon le procédé faisant notamment intervenir la dernière caractéristique qui vient d'être mentionnée, caractérisé en ce qu'il comporte les différentes étapes consistant à :
- scanner une image susceptible d'avoir été marquée ;
- sélectionner un ensemble de pixels scannés correspondant à une zone de contour dans la première composante ;
- constituer un premier sous-groupe de pixels parmi les pixels sélectionnés, en ne conservant que les pixels dont la valeur de niveau de gris de la deuxième composante est inférieure à un premier seuil de récupération préalablement déterminé ; modifier les valeurs de niveau de gris des pixels du premier sous-groupe en les transformant en pixels noirs ;
- constituer un deuxième sous-groupe de pixels parmi les pixels sélectionnés, en ne conservant que les pixels dont la valeur de niveau de gris de la troisième composante est inférieure à un deuxième seuil de récupération préalablement déterminé ; modifier les valeurs de niveau de gris des pixels du deuxième sous-groupe en les transformant en pixels blancs ;
- fusionner le premier sous-groupe de pixels et le deuxième sous-groupe de pixels dont les valeurs de niveau de gris ont été modifiées.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, un exemple particulier de motif servant de base à la fabrication d'une marque à insérer dans une image cible lors de la mise en oeuvre du procédé selon l'invention;
- à la figure 2, un exemple préféré de marque réalisée à partir du motif de la figure 1 intervenant dans le procédé de marquage selon l'invention ;
- à la figure 3, un organigramme illustrant un exemple de mise en oeuvre du procédé de marquage selon l'invention;
- Figure 4, un organigramme illustrant un exemple de mise en oeuvre du procédé de récupération de marque selon l'invention.

### DESCRIPTION DES FORMES DE REALISATION PREFEREES DE L'INVENTION

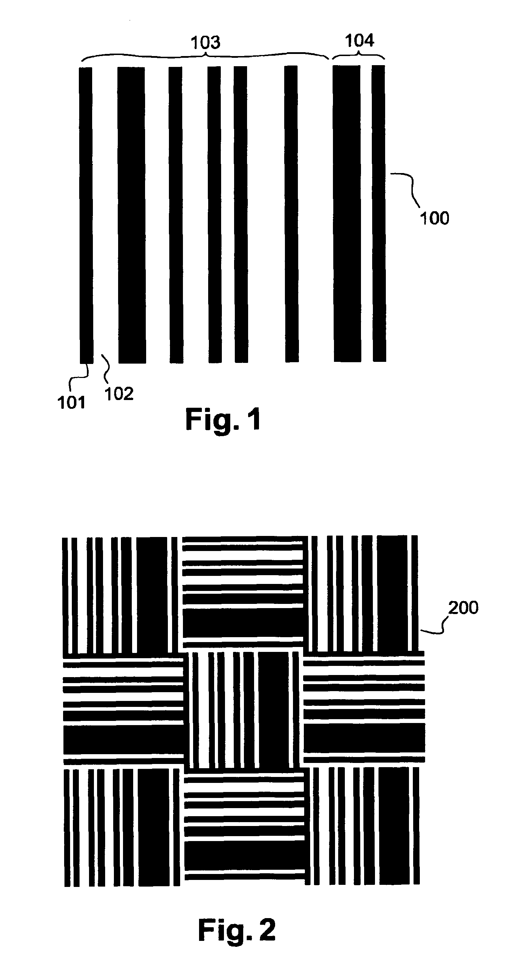

Les figures 1 et 2 illustrent un exemple particulier de constitution de la marque destinée à être insérée dans les différentes images cibles. Sur la figure 1, un code barre 100 est représenté. Le code barre 100 constitue le motif de la marque. Le choix de la marque avec une structure basée sur un code barre a été motivé notamment pour des raisons de robustesse de ce type de marque. L'alternance de bandes noires 101 et de bandes blanches 102 de même largeur permet, lorsqu'une partie d'une bande est manquante, par extrapolation des parties effectivement détectées dans l'image cible lors des opérations de récupération de la marque, de compléter ladite bande dont il manque une partie. Une telle extrapolation n'est pas possible avec des symboles plus complexes que des bandes où, lorsqu'une partie de l'information est perdue, il n'est pas possible de la reconstituer à partir des seules informations récupérées.

Par ailleurs, le choix d'un code barre comme marque permet de coder facilement des informations relatives à l'origine de l'appareil servant à la reproduction de l'image, par exemple la photocopieuse, en associant de façon bijective une information binaire - 1 ou 0 - à une bande de couleur - bande blanche ou bande noire. Dans les exemples considérés, on utilise des codes barres constitués d'une succession de 20 bandes 103 qui permettent de coder un numéro d'identification de l'appareil. Les 20 bandes 103 donnent la possibilité de coder 20 bits ; il est donc possible d'y placer plus de un million de numéros d'identification. Si nécessaire, on augmente le nombre de bandes pour augmenter le nombre de numéros d'identification disponibles. A la succession des 20 bandes 103, on a prévu l'ajout de 4 bandes supplémentaires 104 permettant d'insérer des informations d'autocorrection (CRC). On définit, pour un tel motif, un sens de lecture qui permet de déterminer par quelle extrémité il faut commencer à décrypter le code barre pour obtenir le code auquel il correspond.

Afin d'augmenter encore la robustesse de la marque, le motif 100 est répété plusieurs fois pour constituer la marque à insérer dans l'image cible. Dans l'invention, on a choisi de construire une marque composée de la répétition à l'identique d'un motif constitué d'un code barre du type de celui représenté à la figure 1. On obtient ainsi une marque 200, élaborée à partir d'un code barre différent de celui de la figure 1, telle que représentée à la figure 2. Dans l'invention, le motif est répété au moins deux fois. On dispose ainsi d'une information redondante en incluant au moins deux codes barre identiques dans la marque, ce qui améliore la robustesse de la marque. De préférence, le premier code barre et le deuxième code barre sont juxtaposés, et le deuxième code barre a subi une rotation de 90 degrés par rapport à la disposition du premier code barre, de telle sorte qu'une des extrémités des bandes noires et blanches du deuxième code barre est délimitée par une bande, noire ou blanche, du premier code barre, ladite bande du premier code barre étant perpendiculaire aux bandes du deuxième code barre. Une telle délimitation permet de faciliter les opérations de récupération de la marque.

Dans certains exemples de mise en oeuvre du procédé selon l'invention, le motif à partir duquel est réalisée la marque est carré. Dans un exemple particulier de réalisation, le côté du motif est destiné à couvrir 480 pixels de l'image cible à 600 dpi. Avec un tel motif, il est très facile de réaliser une marque du type de celle représentée à la figure 2, où on réalise un pavage, à l'aide du motif 100, d'une taille correspondant à la taille de l'image cible, ou d'une taille supérieure à l'image cible pour qu'une information relative à la marque soit susceptible d'être insérée sur n'importe quelle partie de l'image cible. Dans certains exemples, on choisit un pavage ayant une taille équivalente à celle d'une feuille A4. Une telle façon de faire assure une redondance maximale des informations contenues dans la marque, et donc une robustesse optimale. Deux motifs consécutifs sont disposés de telle sorte que leurs bandes soient perpendiculaires. On a ainsi une alternance de motifs à bandes horizontales et de motifs à bandes verticales, qui ont toujours, de préférence, le même sens de lecture, par exemple de gauche à droite pour les motifs à bandes verticales, et de haut en bas pour les motifs à bandes horizontales. Une telle marque permet de satisfaire les contraintes géométriques précédemment mentionnées.

Une fois la marque créée, il reste à l'insérer dans l'image cible. A cet effet, comme il l'a déjà été expliqué, on détermine une dépendance en image selon certains critères avant de modifier des valeurs de pixels selon d'autres critères. Dans le procédé selon l'invention, du fait de la lourdeur des calculs intervenant lors des transformations de l'image de type fréquentielles, on a préféré construire une dépendance en image en espace.

Dans l'exemple qui va être décrit, on considère que l'image cible a été scannée et décomposée dans l'espace colorimétrique RVB (Rouge, Vert, Bleu). D'autres espaces colorimétriques, par exemple l'espace Lab ou l'espace YCrCb, peuvent également être utilisés pour la mise en oeuvre du procédé selon l'invention.

Dans une première variante de mise en oeuvre du procédé selon l'invention, on procède, dans une première étape, à une détection des contours dans une des composantes de l'espace colorimétrique, par exemple la composante rouge. Des algorithmes de détection de contour sont utilisés à cet effet. Pour chaque pixel, on évalue s'il appartient ou non à une zone dite de contour, on fait intervenir les valeurs de niveau de gris de la composante rouge des pixels voisins, ces valeurs étant ensuite prises en compte dans des formules de moyenne et de variance adaptées, connues de l'homme du métier. La taille du voisinage que l'on considère est un carré de 9 pixels de côté dont le pixel à évaluer est le centre. En effet, une détection des contours ne faisant apparaître que des lignes d'un ou deux pixels de large n'est pas directement exploitable pour l'insertion d'une marque et sa récupération dans de bonnes conditions. Un ensemble de pixels dits de contours est ainsi déterminé.

Dans une deuxième étape, on détermine si, pour les pixels de contour qui viennent d'être déterminés, la valeur du niveau de gris dans au moins une autre composante de l'espace colorimétrique est inférieure à un certain seuil, dit seuil de marquage ou de modification, ledit seuil de marquage n'étant pas nécessairement le même pour les différentes composantes susceptibles d'intervenir. Si c'est le cas, alors le pixel correspondant est retenu pour appartenir à la dépendance en image. Une fois la dépendance en image déterminée, on peut définir le masque de la marque, qui est constitué des pixels de la dépendance en image qui ont été transformés en pixels noirs ou blancs en fonction de l'information de la marque qu'ils sont destinés à dissimuler. C'est ce masque que l'on cherche à obtenir lors des opérations de récupération de la marque.

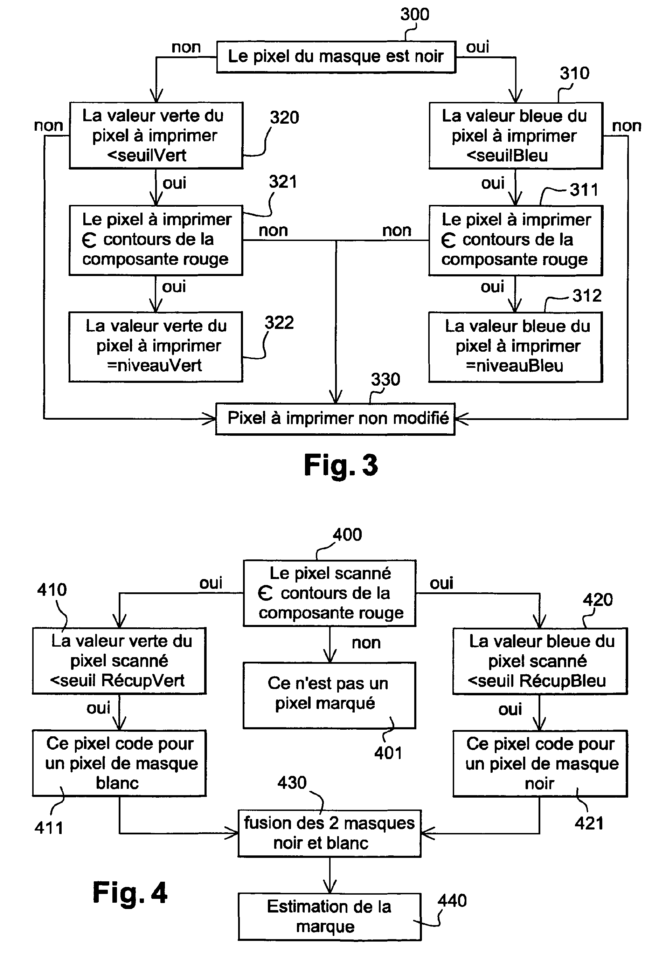

Une deuxième variante de mise en oeuvre du procédé selon l'invention, qui permet de réduire le volume de calcul intervenant dans la première variante, et donc d'augmenter la vitesse d'exécution du procédé, est illustré par la figure 3. Dans cette variante, on sélectionne tout d'abord les pixels, dans au moins une composante donnée de l'espace colorimétrique choisi, dont les niveaux de gris sont inférieurs à des seuils de marquage, puis on détermine si ces pixels sélectionnés appartiennent à une zone de contour dans une tierce composante pour, le cas échéant, retenir ledit pixel dans la dépendance en image.

Ainsi, dans l'exemple illustré par la figure 3, on se demande, dans une étape 300, pour chaque pixel de l'image cible, si le pixel correspondant du masque est noir. Si c'est le cas, on se demande dans une étape 310, si la valeur de niveau de gris dans la composante bleue du pixel considéré est inférieure à un premier seuil de marquage, Seuilbleu, propre à la composante bleue. Si c'est le cas, on se demande, dans une étape 311, si la composante rouge du pixel considéré appartient à une zone de contour dans cette composante. Si c'est le cas, la valeur de la composante bleue du pixel considéré prend, dans une étape 312, une valeur préalablement déterminée, Niveaubleu, significative de la présence d'un pixel noir dans le masque à cet endroit. A l'issue des étapes 310 et 311,si la réponse à la question posée dans ces étapes est négative, le procédé passe a une étape 330 dans laquelle on décide de ne pas modifier le pixel considéré de l'image cible.

Si à l'issue de l'étape 300, on a déterminé que le pixel correspondant du masque n'est pas noir, donc qu'il est blanc, on passe à une étape 320 dans laquelle on se demande si une valeur de niveau de gris dans la composante verte du pixel considéré est inférieure à un deuxième seuil de marquage, Seuilvert, propre à la composante verte. Si c'est le cas, on se demande, dans une étape 321, si la composante rouge du pixel considéré appartient à une zone de contour dans cette composante. Si c'est le cas, la valeur de la composante verte du pixel considéré prend une valeur préalablement déterminée, Niveauvert, significative de la présence d'un pixel blanc du masque à cet endroit. A l'issue des étapes 320 et 321, si la réponse à la question posée dans ces étapes est négative, le procédé passe a une étape 330 dans laquelle on décide de ne pas modifier le pixel considéré de l'image cible.

Le procédé de récupération d'une marque insérée selon une des variantes qui viennent d'être décrites est illustré à la figure 4. Le procédé de récupération fait nécessairement appel à une étape préalable dans laquelle l'image éventuellement marquée est scannée et est décomposée dans un espace colorimétrique. Dans une première étape 400, on se demande, pour chaque pixel de l'image scannée, s'il appartient à une zone de contours d'une composante qui n'aurait pas été modifiée pour dissimuler des informations relatives à la marque, par exemple la composante rouge. En effet, hormis les modifications dues au bruit de l'impression et au décalage à la numérisation, cette composante est restée identique à la composante originale de l'image cible. Si le pixel n'appartient pas à une telle zone de contours, il est considéré, dans une étape 401, comme n'étant pas porteur d'informations de marque. Si le pixel considéré appartient à une telle zone de contours, on procède, dans une étape 410, respectivement 420, à un test de comparaison pour déterminer si la valeur de la composante verte, respectivement bleue, est inférieure à un seuil de récupération de la composante verte, Seuilrécupvert, respectivement bleue, Seuilrécupbleu, auquel cas le pixel sera considéré, dans une étape 411, respectivement 421, comme codant une information relative à la présence d'un pixel blanc, respectivement noir, du masque.

A l'issue de l'étape 411, respectivement 421, on dispose donc d'un sous-ensemble de pixels de l'image scannée porteurs d'une information codant la présence d'un pixel blanc, respectivement noir, de la marque ; on modifie donc la valeur de ces pixels pour les rendre blancs, respectivement noirs, et on superpose ainsi les sous-ensembles obtenus pour chaque motif de la marque dans une étape 430 pour récupérer une marque aussi complète que possible, qui sera complétée dans une étape 440 par interpolation des valeurs des pixels effectivement identifiés.

Les seuils de récupération dans les composantes vertes et bleues ne sont pas nécessairement figés. Un utilisateur mettant en oeuvre le procédé selon l'invention est en mesure de les faire évoluer et ainsi faire éventuellement ressortir plus clairement les pixels marqués. Cette liberté dans les seuils de récupération permet de s'affranchir des perturbations liées aux opérations de numérisation et d'impression. Dans le procédé selon l'invention, en effectuant des opérations différentes (détection de contour ou modifications de valeurs de niveau de gris) sur chaque composante de l'espace colorimétrique, les perturbations liées aux opérations d'impression et de numérisation ne sont plus gênantes.

Le procédé selon l'invention est alternativement avantageusement mis en oeuvre dans tout autre espace colorimétrique ; par ailleurs, une permutation des rôles attribués aux composantes de l'espace RVB ne sort pas non plus du cadre de l'invention. Des résultats probants ont cependant été obtenus avec un tel espace colorimétrique et une telle répartition des rôles pour les différentes composantes.

## Revendications

1. Procédé de marquage d'une image cible, consistant à insérer de manière invisible une marque (200) dans ladite image cible, comportant notamment les différentes étapes consistant à :
- numériser l'image cible ;
- déterminer dans l'image cible un ensemble de pixels appropriés au marquage constituant la dépendance en image;
- modifier des valeurs de composantes d'un sous-ensemble de pixels appartenant à la dépendance en image en y introduisant des informations relatives à la marque à insérer;
**caractérisé en ce que**, lesdites composantes étant au moins au nombre de trois, la marque (200) à insérer est constituée d'un pavage formé d'une répétition de motifs identiques (100) de type code barre présentant une succession de barres noires (101) et de barres blanches (102), ledit pavage comportant au moins un premier motif et un deuxième motif juxtaposés, le deuxième motif ayant subi une rotation de 90 degrés par rapport au premier motif ;
et **en ce que** le procédé comporte :
dans l'étape de détermination de la dépendance en image, l'opération consistant à :
- sélectionner un ensemble de pixels de l'image cible constituant des zones de contour dans une première composante d'un espace colorimétrique dans lequel l'image cible est numérisée ;
et dans l'étape de modification de valeurs de composantes, l'opération consistant à :
- pour les pixels sélectionnés, et dans au moins une deuxième composante dudit espace colorimétrique, modifier (312 ;322) certaines valeurs de niveau de gris de cette composante pour y introduire une information relative à la marque (200).

2. Procédé de marquage d'une image cible selon la revendication précédente **caractérisé en ce que** le motif (100) est un code barre carré.

3. Procédé de marquage d'une image cible selon la revendication précédente **caractérisé en ce que** la marque (200) à insérer est une répétition, sur la totalité d'une surface correspondant à la taille de l'image cible, du motif (100) de type code barre, chaque motif ayant subi une rotation de 90 degrés par rapport à chaque motif qui lui est directement adjacent.

4. Procédé de marquage d'une image cible selon l'une au moins des revendications précédentes **caractérisé en ce que** la dépendance en image est comprise dans des zones de contour de ladite image cible.

5. Procédé de marquage d'une image cible selon l'une au moins des revendications précédentes **caractérisé en ce que** les composantes modifiées de l'espace colorimétrique sont une deuxième composante et une troisième composante de l'espace colorimétrique, les valeurs de niveau de gris de la deuxième composante étant modifiées pour introduire une information relative à la présence d'une bande noire (101) du motif (100) de type code barre, et les valeurs de niveau de gris de la troisième composante étant modifiées pour introduire une information relative à la présence d'une bande blanche (102) du motif (100) de type code barre.

6. Procédé de marquage selon l'une au moins des revendications précédentes **caractérisé en ce que** les valeurs de niveau de gris à modifier sont celles qui sont inférieures à un seuil de modification préalablement déterminé, deux composantes différentes pouvant avoir des seuils de modification différent.

7. Procédé de marquage selon l'une au moins des revendications 1 à 3 **caractérisé en ce qu'**il comporte, dans l'étape de détermination de la dépendance en image, les opérations consistant à :
- sélectionner un ensemble de pixels de l'image cible, dans un groupe de composantes d'un espace colorimétrique dans lequel l'image cible est numérisée, dont les valeurs de niveau de gris sont inférieures, pour chaque composante considérée, à un seuil de modification propre à chaque composante ;
- choisir, parmi les pixels sélectionnés, ceux appartenant à une zone de contour dans une première composante de l'espace colorimétrique n'appartenant pas audit groupe de composantes, pour constituer la dépendance en image.

8. Procédé de marquage selon la revendication précédente **caractérisé en ce que** le groupe de composantes est constitué d'une deuxième composante et d'une troisième composante de l'espace colorimétrique, et **en ce que**, pour les pixels constituant la dépendance en image, les valeurs de niveau de gris de la deuxième composante sont modifiées pour introduire une information relative à la présence d'une bande noire (101) du motif (100) de type code barre, et les valeurs de niveau de gris de la troisième composante sont modifiées pour introduire une information relative à la présence d'une bande blanche (102) du motif (100) de type code barre.

9. Procédé de marquage d'une image cible selon l'une au moins des revendications précédentes **caractérisé en ce que** l'espace colorimétrique dans lequel l'image cible est numérisé est l'espace RVB.

10. Procédé de marquage d'une image cible selon la revendication précédente, et selon la revendication 5 ou la revendication 8, **caractérisé en ce que** la première composante est la composante rouge, la deuxième composante est la composante bleue, et la troisième composante est la composante verte.

11. Procédé de récupération d'une marque insérée selon le procédé selon la revendication 10, **caractérisé en ce qu'**il comporte les différentes étapes consistant à :
- scanner une image susceptible d'avoir été marquée ;
- sélectionner (400) un ensemble de pixels scannés correspondant à une zone de contour dans la première composante ;
- constituer (412) un premier sous-groupe de pixels parmi les pixels sélectionnés, en ne conservant que les pixels dont la valeur de niveau de gris de la deuxième composante est inférieure à un premier seuil de récupération préalablement déterminé ; modifier les valeurs de niveau de gris des pixels du premier sous-groupe pour qu'ils soient des pixels noirs ;
- constituer (411) un deuxième sous-groupe de pixels parmi les pixels sélectionnés, en ne conservant que les pixels dont la valeur de niveau de gris de la troisième composante est inférieure à un deuxième seuil de récupération préalablement déterminé ; modifier les valeurs de niveau de gris des pixels du deuxième sous-groupe pour qu'ils soient des pixels blancs ;
- fusionner (430) le premier sous-groupe de pixels et le deuxième sous-groupe de pixels dont les valeurs de niveau de gris ont été modifiées.

## Claims

1. A method for marking a target image, consisting of inserting in an invisible manner a mark (200) in said target image, in particular comprising different steps consisting of:
- digitizing the target image;
- determining a set of pixels in the target image that are suitable for the marking constituting the image dependence;
- modifying some values of the components of a subset of pixels belonging to the image dependence by introducing information relative to the mark to be inserted;
**characterized in that**, said components being at least three, the mark (200) to be inserted is comprised of a tiling formed by repeating identical patterns (100) of the bar code type presenting a succession of black bars (101) and white bars (102), said tiling comprising at least a first pattern and a second pattern juxtaposed, the second pattern having rotated 90 degrees with relation to the first pattern;
and **in that** the method comprises:
in the image determination and dependence step, the operation consisting of:
- selecting a set of pixels from the target image constituting contour zones in a first component of a colorimetric space in which the target image is digitized;
and in the component value modification step, the operation consisting of:
- for the selected pixels, and in at least one second component of said colorimetric space, modifying (312; 322) certain grey level values of this component to introduce information relative to the mark (200).

2. The method for marking a target image according to the previous claim **characterized in that** the pattern (100) is a square bar code.

3. The method of marking a target image according to the previous claim **characterized in that** the mark (200) to be inserted is a repetition, on the totality of a surface corresponding to the size of the target image, of the bar code type pattern (100), each pattern having rotated 90 degrees with relation to each directly adjacent pattern.

4. The method for marking a target image according to at least one of the previous claims **characterized in that** the image dependence is included in the contour zones of said target image.

5. The method for marking a target image according to at least one of the previous claims **characterized in that** the modified components of the colorimetric space are a second component and a third component of the colorimetric space, the grey level values of the second component being modified to introduce information relative to the presence of a black band (101) of the bar code type pattern (100), and grey level values of the third component being modified to introduce information relative to the presence of a white band (102) of the bar code type pattern (100).

6. The marking method according to at least one of the previous claims **characterized in that** the grey level values to be modified are those that are lower than a previously determined modification threshold, two different components may have different modification thresholds.

7. The marking method according to at least one of claims 1 to 3 **characterized in that** the method comprises, in the image dependence determination step, operations consisting of:
- selecting a set of target image pixels, in a group of components from a colorimetric space in which the target image is digitized, whose grey level values are lower, for each component considered, than a modification threshold specific to each component;
- choosing, from among the selected pixels, those belonging to a contour zone in a first colorimetric space component not belonging to the component group, to constitute the image dependence.

8. The marking method according to the previous claim **characterized in that** the group of components is comprised of a second component and a third component from the colorimetric space, and **in that**, for pixels comprising the image dependence, the grey level values of the second component are modified to introduce information relative to the presence of a black band (101) of the bar code type pattern (100), and grey level values of the third component are modified to introduce information relative to the presence of a white band (102) of the bar code type pattern (100).

9. The marking method of a target image according to at least one of the previous claims **characterized in that** the colorimetric space in which the target image is digitized is the RGB space.

10. The marking method of a target image according to the previous claim, and according to claim 5 or claim 8, **characterized in that** the first component is the red component, the second component is the blue component and the third component is the green component.

11. A method for recovering an inserted mark according to the method according to claim 10, **characterized in that** the method comprises different steps consisting of:
- scanning an image capable of having been marked;
- selecting (400) a set of scanned pixels corresponding to a contour zone in the first component;
- constituting (412) a first subgroup of pixels from among the selected pixels, by only keeping pixels whose grey level value of the second component is less than a previously determined recovering threshold; modifying the grey level values of the pixels from the first subgroup so that they are black pixels;
- constituting (411) a second subgroup of pixels from among the selected pixels, by only keeping pixels whose grey level value of the third component is less than a second previously determined recovery threshold; modifying the grey level values of the pixels from the second subgroup so that they are white pixels;
- merging (430) the first subgroup of pixels and the second subgroup of pixels whose grey level values have been modified.

## Patentansprüche

1. Kennzeichnungsverfahren eines Zielbilds, das darin besteht, unsichtbar eine Kennzeichnung (200) in das Zielbild einzufügen, das insbesondere die folgenden unterschiedlichen Schritte aufweist:
- Digitalisieren des Zielbilds;
- in dem Zielbild Bestimmen einer Einheit Pixel, die zum Kennzeichnen, das die Bildabhängigkeit bildet, geeignet sind;
- Ändern der Werte von Komponenten einer Untereinheit von Pixeln, die zu der Bildabhängigkeit gehören, indem in sie Informationen in Zusammenhang mit der einzufügenden Kennzeichnung eingeführt werden;
**dadurch gekennzeichnet, dass** die Komponenten mindestens drei sind, wobei die einzufügende Kennzeichnung (200) aus einer Pflasterung gebildet aus einer Wiederholung identischer Muster (100) des Typs Strichcode, der eine Abfolge schwarzer Streifen (101) und weißer Streifen (102) aufweist, besteht, wobei das Pflastern mindestens ein erstes und ein zweites nebeneinander liegendes Muster aufweist, wobei das zweite Muster in Bezug auf das erste Muster um 90° gedreht wurde;
und dass das Verfahren Folgendes aufweist:
in dem Schritt des Bestimmens der Bildabhängigkeit den Vorgang, der aus Folgendem besteht:
- Auswahl einer Einheit Pixel des Zielbilds, die Konturzonen in einer ersten Komponente eines kolorimetrischen Raums, in dem das Zielbild digitalisiert wird, bildet;
und in dem Schritt des Änderns der Werte der Komponenten den Schritt, der aus Folgendem besteht:
- für die ausgewählten Pixel und mindestens in einer zweiten Komponente des kolorimetrischen Raums, Ändern (312; 322) bestimmter Graustufenwerte dieser Komponente, um darin eine Information in Zusammenhang mit der Kennzeichnung (200) einzuführen.

2. Kennzeichnungsverfahren eines Zielbilds gemäß dem vorhergehenden Anspruch, **dadurch gekennzeichnet, dass** das Muster (100) ein quadratischer Strichcode ist.

3. Kennzeichnungsverfahren eines Zielbilds nach dem vorhergehenden Anspruch, **dadurch gekennzeichnet, dass** die einzufügende Kennzeichnung (200) eine Wiederholung auf der Gesamtheit einer Fläche, die der Größe des Zielbilds entspricht, des Musters (100) des Typs Strichcode ist, wobei jedes Muster in Bezug auf jedes Muster, das gleich neben ihm liegt, um 90° gedreht wurde.

4. Kennzeichnungsverfahren eines Zielbilds gemäß mindestens einem der vorhergehenden Ansprüche, **dadurch gekennzeichnet, dass** die Bildabhängigkeit in Konturzonen des Zielbilds enthalten ist.

5. Kennzeichnungsverfahren eines Zielbild nach mindestens einem der vorhergehenden Ansprüche, **dadurch gekennzeichnet, dass** die geänderten Komponenten des kolorimetrischen Raums eine zweite Komponente und eine dritte Komponente des kolorimetrischen Raums sind, wobei die Graustufenwerte der zweiten Komponente geändert werden, um eine Information in Zusammenhang mit der Gegenwart eines schwarzen Streifens (101) des Musters (100) des Typs Strichcode einzuführen, und wobei die Graustufenwerte der dritten Komponente geändert werden, um eine Information in Zusammenhang mit der Gegenwart eines weißen Streifens (102) des Musters (100) des Typs Strichcode einzuführen.

6. Kennzeichnungsverfahren nach mindestens einem der vorhergehenden Ansprüche, **dadurch gekennzeichnet, dass** die zu ändernden Graustufenwerte die sind, die niedriger sind als ein zuvor festgelegter Änderungsschwellenwert, wobei zwei unterschiedliche Komponenten unterschiedliche Änderungsschwellenwerte haben können.

7. Kennzeichnungsverfahren nach mindestens einem der Ansprüche 1 bis 3, **dadurch gekennzeichnet, dass** es in dem Schritt des Bestimmens der Bildabhängigkeit die folgenden Vorgänge aufweist:
- Auswahl einer Einheit von Pixeln des Zielbilds aus einer Gruppe von Komponenten eines kolorimetrischen Raums, in dem das Zielbild digitalisiert ist, dessen Graustufenwerte für jede betreffende Komponente kleiner sind als ein zu jeder Komponente gehörender Änderungsschwellenwert;
- aus den ausgewählten Pixeln Auswahl der Pixel, die zu einer Konturzone in einer ersten Komponente des kolorimetrischen Raums gehören, der nicht zu der Gruppe von Komponenten gehört, um die Bildabhängigkeit zu bilden.

8. Kennzeichnungsverfahren nach dem vorhergehenden Anspruch, **dadurch gekennzeichnet, dass** die Gruppe von Komponenten aus einer zweiten Komponente und einer dritten Komponente des kolorimetrischen Raums besteht, und dass für die Pixel, die die Bildabhängigkeit bilden, die Graustufenwerte der zweiten Komponente geändert werden, um eine Information in Zusammenhang mit der Gegenwart eines schwarzen Streifens (101) des Musters (100) des Typs Strichcode einzuführen, und die Graustufenwerte der dritten Komponente geändert werden, um eine Information in Zusammenhang mit der Gegenwart eines weißen Streifens (102) des Musters (100) des Typs Strichcode einzuführen.

9. Kennzeichnungsverfahren eines Zielbilds nach mindestens einem der vorhergehenden Ansprüche, **dadurch gekennzeichnet, dass** der kolorimetrische Raum, in dem das Zielbild digitalisiert wird, der RVB-Raum ist.

10. Kennzeichnungsverfahren eines Zielbilds nach dem vorhergehenden Anspruch und nach Anspruch 5 oder 8, **dadurch gekennzeichnet, dass** die erste Komponente die rote Komponente ist, die zweite Komponente die blaue Komponente ist, und dass die dritte Komponente die grüne Komponente ist.

11. Rückgewinnungsverfahren einer Kennzeichnung, die gemäß dem Verfahren nach Anspruch 10 eingefügt wurde, **dadurch gekennzeichnet, dass** es die folgenden unterschiedlichen Schritte aufweist:
- Scannen eines Bilds, das eventuell **gekennzeichnet** wurde;
- Auswahl (400) einer Einheit gescannter Pixel, die einer Konturzone in der ersten Komponente entspricht;
- Bilden (412) einer ersten Pixeluntergruppe aus den ausgewählten Pixeln, indem nur die Pixel behalten werden, deren Graustufenwert der zweiten Komponente kleiner ist als ein erster zuvor bestimmter Rückgewinnungsschwellenwert; Ändern der Graustufenwerte der Pixel der ersten Untergruppe, so dass sie schwarze Pixel sind;
- Bilden (411) einer zweiten Pixeluntergruppe aus den ausgewählten Pixeln, indem nur die Pixel behalten werden, deren Graustufenwert der dritten Komponente kleiner ist als ein zweiter vorausbestimmter Rückgewinnungsschwellenwert; Ändern der Graustufenwerte der Pixel der zweiten Untergruppe, so dass sie weiße Pixel sind;
- Fusionieren (430) der ersten Pixeluntergruppe und der zweiten Pixeluntergruppe, deren Graustufenwerte geändert wurden.
